# EUROPÄISCHE PATENTSCHRIFT

(11) **EP 2 572 913 B1**
(45) Veröffentlichungstag und Bekanntmachung des Hinweises auf die Patenterteilung: **02.08.2017**
(21) Anmeldenummer: 12183061.6
(22) Anmeldetag: 05.09.2012
(51) Int. Cl.: B60J 7/06, B60J 7/12

(54) **Fahrzeugdach mit einem öffnungsfähigen Faltdach**
Vehicle roof with an openable collapsible roof
Toit de véhicule avec toit pliant ouvrant

(30) Priorität: 22.09.2011 DE 102011113888
(43) Veröffentlichungstag der Anmeldung: 27.03.2013
(73) Patentinhaber: Magna Car Top Systems GmbH, 74321 Bietigheim-Bissingen (DE)
(72) Erfinder: Käsweber, Hubert, 71636 Ludwigsburg (DE); Schmälzle, Rüdiger, 74357 Bönnigheim (DE)
(74) Vertreter: Völger, Silke Beatrix

(56) Entgegenhaltungen:
- EP-A1- 2 072 305
- EP-A2- 0 376 203
- CH-A- 165 013
- DE-C2- 3 723 598

## Beschreibung

Die Erfindung bezieht sich auf ein Fahrzeugdach mit einem öffnungsfähigen Faltdach nach dem Oberbegriff des Anspruches 1.

In der DE 37 23 598 C2 wird ein Fahrzeugdach für ein Kraftfahrzeug beschrieben, das als Faltschiebedach ausgeführt ist und mehrere, in seitlichen Dachführungen längsverschiebliche Spriegel aufweist, welche einen Verdeckbezugstoff tragen. Zum Öffnen des Faltschiebedachs werden die Spriegel einschließlich einer vorne liegenden Dachkappe, an der der Verdeckbezugstoff befestigt ist, in den seitlichen Führungen nach hinten verschoben, wodurch der Verdeckbezugstoff in Falten geworfen wird. Für einen definierten Faltenwurf sowie zum Spannen des Verdeckbezugstoffes in der geschlossenen Dachposition ist im linken und rechten Dachseitenbereich jeweils ein Spannseil durch den Verdeckbezugstoff geführt, das von einem Federelement kraftbeaufschlagt ist, um eine definierte Seilspannung zu erzeugen. Das Federelement ist als Schraubenfeder ausgeführt, die in Verlängerung des Spannseils angeordnet ist.

Des Weiteren ist aus der EP 0 376 203 A2, die den nächstliegenden Stand der Technik bildet, ein Fahrzeugdach mit einem das Faltdach im geschlossenen Zustand spannenden Spannseil, das einenends an einem vorderen Dachteil des Faltdachs und anderenends an einem hinteren Dachteil gehalten ist, bekannt. Das Spannseil ist über eine Spannfeder kraftbeaufschlagt gehalten.

Der Erfindung liegt die Aufgabe zugrunde, mit einfachen konstruktiven Maßnahmen ein Fahrzeugdach mit einem öffnungsfähigen Faltdach so auszubilden, dass das Faltdach in variabler Weise im geschlossenen Zustand unter Spannung gesetzt werden kann.

Diese Aufgabe wird erfindungsgemäß mit den Merkmalen des Anspruches 1 gelöst. Die Unteransprüche geben zweckmäßige Weiterbildungen an.

Das Fahrzeugdach weist ein verstellbares Faltdach auf, das zwischen einer geschlossenen Position, in der eine Öffnung im Fahrzeugdach verdeckt ist, und einer geöffneten Position verstellbar ist, in der die Öffnung freiliegt. Das Faltdach ist beispielsweise als ein Faltschiebedach ausgeführt, das zur Überführung zwischen Schließ- und Öffnungsposition eine Verschiebebewegung entlang der Fahrzeuglängsachse ausführt. Zu diesem Zweck können seitliche, oben liegende Führungsschienen, die aufbau- bzw. karosseriefest gehalten sind, im Fahrzeugdach vorgesehen sein, die die zwischenliegende Öffnung begrenzen und in denen das Faltschiebedach entlang der Längsachse verschiebbar ist.

Das Faltdach weist einen Verdeckbezugstoff sowie ein Gestänge auf, welches Träger des Verdeckbezugstoffes ist. Zum Überführen zwischen der Schließ- und Öffnungsposition wird das Gestänge einschließlich Verdeckbezugstoff verstellt. Im Falle eines Faltschiebedaches umfasst das Gestänge einen oder mehrere Dachspriegel, die sich in Fahrzeugquerrichtung zwischen den seitlichen Führungsschienen erstrecken und die mit dem Verdeckbezugstoff gekoppelt sind. Das vordere Dachteil bildet eine Dachkappe, an der der Verdeckbezugstoff angebunden ist. Bei geöffnetem Fahrzeugdach legt sich der Verdeckbezugstoff in Falten.

Um den Verdeckbezugstoff in geschlossenem Zustand des Faltdaches unter Spannung zu setzen, ist ein Spannseil vorgesehen, das mit dem Verdeckbezugstoff des Faltdaches verbunden ist. Vorteilhafterweise befindet sich jeweils ein Spannseil im linken und rechten Dachseitenbereich, wobei jedes Spannseil mit dem Verdeckbezugstoff verbunden ist.

Das Spannseil wird von einer Spannfeder beaufschlagt, die bei geschlossenem Dach im Spannseil eine Zugkraft erzeugt und das Spannseil unter Spannung setzt. Die Spannfeder erlaubt es, zur Kompensation von Toleranzen eine Ausgleichsbewegung auszuführen. Das Spannseil erstreckt sich insbesondere zwischen der vorne liegenden Dachkappe des Faltdaches und einem aufbau- bzw. karosseriefesten hinteren Dachteil, an dem im geöffneten Zustand das Faltdach liegt.

Zwischen der Spannfeder und dem Spannseil ist ein Übertragungshebel angeordnet, der um ein Schwenklager rotierend gelagert ist. An einem Ende des Übertragungshebels greift die Spannfeder an, am anderen Endes das Spannseil. Diese Ausführung hat den Vorteil, dass zum einen über den Übertragungshebel eine Hebelwirkung erzielt werden kann, so dass in Abhängigkeit der Hebelverhältnisse eine Verstärkung oder Verringerung der auf das Spannseil wirkenden Federkraft erreicht wird. Vorteilhafterweise werden die Hebelverhältnisse so gewählt, dass eine Kraftverstärkung eingestellt wird, indem der Abstand zwischen dem Kraftangriffspunkt der Spannfeder am Übertragungshebel und dem Schwenklager größer gewählt wird als der Abstand zwischen dem Schwenklager und dem Kraftangriffspunkt des Spannseils am Übertragungshebel. Die Kraftverstärkung hat den Vorteil, dass verhältnismäßig klein dimensionierte Spannfedern eingesetzt werden können.

Zum andern erlaubt der Übertragungshebel eine Richtungsänderung im Kraftfluss zwischen der Spannfeder und dem Spannseil. Dies ermöglicht es, die Spannfeder beispielsweise mit seitlichem Abstand zur Längsachse des Spannseils anzuordnen, insbesondere seitlich nach innen versetzt, so dass zusätzliche konstruktive Gestaltungsmöglichkeiten hinsichtlich der Anordnung der Spannfeder gegeben sind. Bei seitlich versetzter Anordnung des Übertragungshebels und der Spannfeder wird in Fahrzeuglängsrichtung kein zusätzlicher Bauraum für diese Bauteile beansprucht.

Über die Spannfeder wird eine Spannkraft im Spannseil im geschlossenen Dachzustand erzeugt. Hierbei kommen sowohl Ausführungen der Spannfeder als Zugfeder in Betracht als auch sonstige Ausführungen, beispielsweise als Druckfeder oder als Drehfeder, die um die Schwenkachse des Übertragungshebels ein Moment ausübt. Über die Spannfeder wird auf den Übertragungshebel ein um die Schwenkachse wirkendes Drehmoment generiert, das den Hebelverhältnissen entsprechend in eine Spannkraft im Spannseil umgesetzt wird.

Es kann zweckmäßig sein, zur Begrenzung der Schwenkbewegung einen Anschlag für den Übertragungshebel vorzusehen, welcher so angeordnet ist, dass die Spannkraft im Spannseil einen Mindestwert erreicht. Der Anschlag befindet sich im Stellweg des Übertragungshebels, den dieser durch die Federkraftbeaufschlagung ausführt. Der Anschlag stellt sicher, dass sich der Übertragungshebel nur bis zum Erreichen des Anschlags unter der Wirkung der Spannfeder verstellen kann. Gegebenenfalls ist der Anschlag verstellbar ausgebildet, um die Spannung im Spannseil bei geschlossenem Fahrzeugdach einstellen zu können.

Das Spannseil ist vorteilhafterweise in einer sich in Fahrzeuglängsrichtung erstreckenden Dichtungsnut geführt, die an den seitlichen Führungsschienen, in denen die Kinematikbauteile des Faltdaches verschieblich geführt sind, gehalten sind.

Weitere Vorteile und zweckmäßige Ausführungen sind den weiteren Ansprüchen, der Figurenbeschreibung und den Zeichnungen zu entnehmen. Es zeigen:
- Fig. 1: eine Ansicht von unten auf ein Fahrzeugdach mit einem öffnungsfähigen Faltdach, dargestellt im geschlossenen Zustand,
- Fig. 2: in vergrößerter Darstellung eine Spanneinrichtung mit einem Spannseil zum Spannen des Verdeckbezugstoffes des Faltdaches sowie einer Spannfeder, die über einen Übertragungshebel eine Spannkraft auf das Spannseil ausübt.

In den Figuren sind gleiche Bauteile mit gleichen Bezugszeichen versehen.

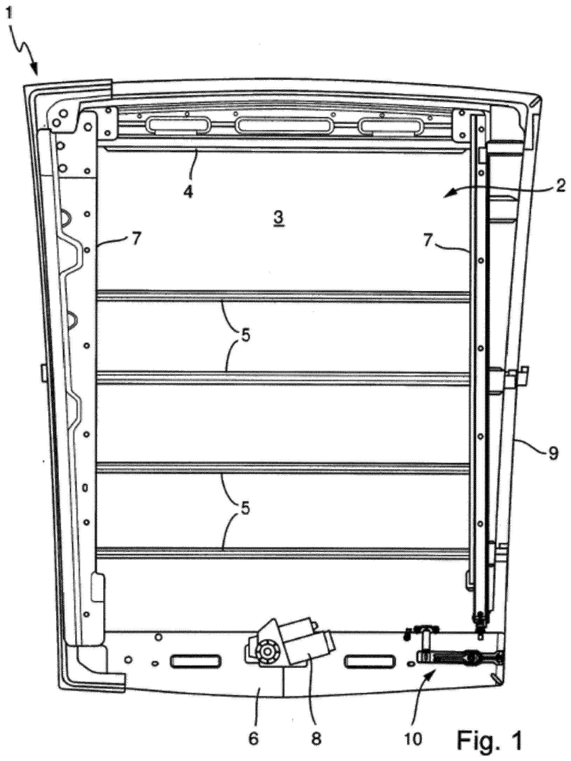

Fig. 1 zeigt in einer Ansicht von unten ein Fahrzeugdach 1 mit einem verstellbaren Faltdach 2, das einen Verdeckbezugstoff 3 sowie mehrere Gestängeteile 4, 5 umfasst, welche den Verdeckbezugstoff 3 tragen. Bei den Gestängeteilen handelt es sich um eine vordere Dachkappe 4, die im geschlossenen Dachzustand in Fahrzeuglängsrichtung vorne liegt, sowie mehrere, sich in Querrichtung erstreckende Dachspriegel 5, die zwischen der vorderen Dachkante 4 und einem hinteren Dachteil 6 angeordnet sind, welches fest bzw. unbeweglich am Fahrzeugaufbau bzw. der -karosserie angeordnet ist. Die vordere Dachkappe 4 und die Dachspriegel 5 sind in seitlichen, aufbauseitigen Führungsschienen 7 geführt und können in den Führungsschienen 7 in Fahrzeuglängsrichtung nach hinten bzw. nach vorne verschoben werden, um den Öffnungs- bzw. Schließvorgang durchzuführen.

Die Verstellbewegung des Faltdaches 2 erfolgt mittels einer Antriebseinrichtung 8, bei der es sich um einen Elektromotor handelt. Zum Öffnen des Faltdaches 2, das als Faltschiebedach ausgeführt ist, werden die Gestängeteile 4, 5 durch eine Betätigung der Antriebseinrichtung 8 in den seitlichen Führungsschienen 7 nach hinten in Richtung hinteres Dachteil 6 verstellt. Der Verdeckbezugstoff 3 ist an den Gestängeteilen 4, 5 gehalten und wird beim Öffnungsvorgang in Falten gelegt.

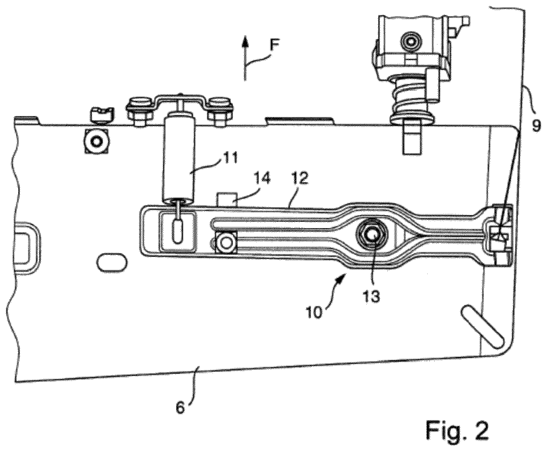

Im geschlossenen Dachzustand wird der Verdeckbezugstoff 3 straff gespannt, da zum einen der Verdeckbezugstoff an der vorderen Dachkappe 4 befestigt ist, die bei geschlossenem Dach den maximalen Abstand zum hinteren Dachteil 6 aufweist, an welchem das gegenüberliegende Ende des Verdeckbezugstoffes 3 befestigt ist. Zum andern ist im seitlichen Dachbereich jeweils ein Spannseil 9 geführt, das mit dem Verdeckbezugstoff 3 verbunden ist und diesen bei geschlossenem Dach zusätzlich mit Spannung beaufschlagt. Das Spannseil 9 verläuft entlang der seitlichen Führungsschienen 7 und ist jeweils in einer Dichtungsnut geführt, die an den Führungsschienen angeordnet ist. Das Spannseil 9 wird über eine Spanneinrichtung 10 unter Spannung gesetzt, die in Fig. 2 im Detail dargestellt ist.

Die Spanneinrichtung 10 umfasst eine Spannfeder 11 und einen Übertragungshebel 12, die jeweils an dem hinteren Dachteil 6 angeordnet sind. Der Übertragungshebel 12 ist über ein Schwenklager 13 schwenkbar am hinteren Dachteil 6 gelagert. Die Spannfeder 11 ist als Zugfeder ausgeführt und an einem Ende des Übertragungshebels 12 angelenkt. Am gegenüberliegenden Ende greift das Spannseil 9 am Übertragungshebel an; die Anlenkpunkte der Spannfeder 11 und des Spannseils 9 am Übertragungshebel 12 befinden sich auf gegenüberliegenden Seiten des Schwenklagers 13. Der Abstand zwischen dem Anlenkpunkt der Spannfeder 11 und dem Schwenklager 13 ist größer als der Abstand zwischen dem Anlenkpunkt des Spannseils 9 und dem Schwenklager 13, wodurch sich eine kraftverstärkende Hebelwirkung ergibt. Dies hat den Vorteil, dass auch bei verhältnismäßig klein dimensionierten Spannfedern 11 eine hohe Seilkraft im Spannseil 9 erzeugt werden kann.

Der Übertragungshebel 12 erstreckt sich zumindest im Wesentlichen bezogen auf die Fahrzeugvorwärtsrichtung F in Querrichtung. Das Schwenklager 13 ist gegenüber dem im seitlichen Randbereich verlaufenden Spannseil 9 in Querrichtung nach innen versetzt. Die Spannfeder 11 liegt bezogen auf das Schwenklager 13 noch weiter in Querrichtung nach innen versetzt. Die Längs- bzw. Wirkachse der Spannfeder 11 verläuft parallel zur Fahrzeugvorwärtsrichtung F.

Um bei geschlossenem Fahrzeugdach eine Mindestspannung zu gewährleisten, ist die Schwenkbewegung des Übertragungshebels 12 um das Schwenklager 13 von einem Anschlag 14 begrenzt, der fest am hinteren Dachteil 6 angeordnet ist. Der Anschlag 14 ist so positioniert, dass bei einer Kraftbeaufschlagung des Übertragungshebels 12 durch die Spannfeder 11 der Übertragungshebel 12 nur bis zum Erreichen des Anschlags 14 sich verschwenken kann, wobei auch in der Anschlagsposition eine Federkraft auf den Übertragungshebel wirkt, die auf das Spannseil 9 übertragen wird.

### Bezugszeichenliste

- 1: Fahrzeugdach
- 2: Faltdach
- 3: Verdeckbezugstoff
- 4: Dachkappe
- 5: Dachspriegel
- 6: hinteres Dachteil
- 7: Führungsschiene
- 8: Antriebseinrichtung
- 9: Spannseil
- 10: Spanneinrichtung
- 11: Spannfeder
- 12: Übertragungshebel
- 13: Schwenklager
- 14: Anschlag

## Patentansprüche

1. Fahrzeugdach mit einem öffnungsfähigen Faltdach (2), mit einem das Faltdach (2) im geschlossenen Zustand spannenden Spannseil (9), das einenends an einem vorderen Dachteil (4) des Faltdaches (2) und anderenends an einem hinteren, aufbauseitigen Dachteil (6) gehalten ist, mit einer das Spannseil (9) mit einer Zugkraft beaufschlagenden Spannfeder (11),
**dadurch gekennzeichnet,**
**dass** zwischen der Spannfeder (11) und dem Spannseil (9) ein Übertragungshebel (12) angeordnet ist, der um ein Schwenklager (13) schwenkbar gelagert ist, wobei die Spannfeder (11) und das Spannseil (9) diesseits und jenseits des Schwenklagers (13) am Übertragungshebel (12) angreifen.

2. Fahrzeugdach nach Anspruch 1,
**dadurch gekennzeichnet,**
**dass** das Schwenklager (13) bezogen auf die Längsachse des Spannseils (9) seitlich versetzt angeordnet ist.

3. Fahrzeugdach nach Anspruch 1 oder 2,
**dadurch gekennzeichnet,**
**dass** die Hebellänge zwischen dem Angriffspunkt der Spannfeder (11) am Übertragungshebel (12) und dem Schwenklager (13) größer ist als die Hebellänge zwischen dem Schwenklager (13) und dem Angriffspunkt der Spannfeder (11) am Übertragungshebel (12).

4. Fahrzeugdach nach einem der Ansprüche 1 bis 3,
**dadurch gekennzeichnet,**
**dass** die Spannfeder (11) gegenüber dem Spannseil (9) versetzt angeordnet ist.

5. Fahrzeugdach nach Anspruch 4,
**dadurch gekennzeichnet,**
**dass** das Spannseil (9) im seitlichen, außenliegenden Dachbereich verläuft und die Spannfeder (11) gegenüber dem Spannseil (9) nach innen versetzt angeordnet ist.

6. Fahrzeugdach nach einem der Ansprüche 1 bis 5,
**dadurch gekennzeichnet,**
**dass** die Spannfeder (11) als Zugfeder ausgeführt ist.

7. Fahrzeugdach nach einem der Ansprüche 1 bis 6,
**dadurch gekennzeichnet,**
**dass** die Spannfeder (11) und der Übertragungshebel (12) an einem aufbaufest angeordneten, hinteren Dachelement gehalten sind.

8. Fahrzeugdach nach einem der Ansprüche 1 bis 7,
**dadurch gekennzeichnet,**
**dass** der Übertragungshebel (12) zur Begrenzung der Schwenkbewegung in Richtung auf die Spannfeder (11) an einem Anschlag (14) abgestützt ist.

9. Fahrzeugdach nach einem der Ansprüche 1 bis 8,
**dadurch gekennzeichnet,**
**dass** das Spannseil (9) in einer Dichtungsnut in Fahrzeuglängsrichtung geführt ist.

10. Cabriolet-Fahrzeug mit einem Fahrzeugdach (1) nach einem der Ansprüche 1 bis 9.

## Claims

1. Vehicle roof with an openable collapsible roof (2), with a tension cable (9) which tensions the collapsible roof (2) in the closed state and is held at one end on a front roof part (4) of the collapsible roof (2) and is held at the other end on a rear, body-side roof part (6), with a stressing spring (11) which loads the tension cable (9) with a tensile force, **characterized in that** a transmission lever (12) which is mounted such that it can be pivoted about a pivoting bearing (13) is arranged between the stressing spring (11) and the tension cable (9), the stressing spring (11) and the tension cable (9) acting on the transmission lever (12) on one side and on the other side of the pivoting bearing (13).

2. Vehicle roof according to Claim 1, **characterized in that** the pivoting bearing (13) is arranged in a laterally offset manner in relation to the longitudinal axis of the tension cable (9).

3. Vehicle roof according to Claim 1 or 2, **characterized in that** the lever length between the action point of the stressing spring (11) on the transmission lever (12) and the pivoting bearing (13) is greater than the lever length between the pivoting bearing (13) and the action point of the stressing spring (11) on the transmission lever (12).

4. Vehicle roof according to one of Claims 1 to 3, **characterized in that** the stressing spring (11) is arranged offset with respect to the tension cable (9).

5. Vehicle roof according to Claim 4, **characterized in that** the tension cable (9) runs in the lateral, outer roof region, and the stressing spring (11) is arranged offset towards the inside with respect to the tension cable (9).

6. Vehicle roof according to one of Claims 1 to 5, **characterized in that** the stressing spring (11) is configured as a tension spring.

7. Vehicle roof according to one of Claims 1 to 6, **characterized in that** the stressing spring (11) and the transmission lever (12) are held on a rear roof element which is arranged fixedly on the body.

8. Vehicle roof according to one of Claims 1 to 7, **characterized in that** the transmission lever (12) is supported on a stop (14) in order to limit the pivoting movement in the direction of the stressing spring (11).

9. Vehicle roof according to one of Claims 1 to 8, **characterized in that** the tension cable (9) is guided in a sealed groove in the vehicle longitudinal direction.

10. Cabriolet vehicle having a vehicle roof (1) according to one of Claims 1 to 9.

## Revendications

1. Toit de véhicule comprenant un toit pliant ouvrant (2), comprenant un câble de tensionnement (9) tendant le toit pliant (2) dans l'état fermé, qui est fixé à une extrémité à une partie de toit avant (4) du toit pliant (2) et à l'autre extrémité à une partie de toit arrière (6) du côté de la carrosserie, avec un ressort de tensionnement (11) sollicitant le câble de tensionnement (9) avec une force de traction,
**caractérisé en ce**
**qu'**entre le ressort de tensionnement (11) et le câble de tensionnement (9) est disposé un levier de transfert (12) qui est supporté de manière à pouvoir pivoter autour d'un palier pivotant (13), le ressort de tensionnement (11) et le câble de tensionnement (9) s'engageant de part et d'autre du palier pivotant (13) avec le levier de transfert (12).

2. Toit de véhicule selon la revendication 1,
**caractérisé en ce que**
le palier pivotant (13) est disposé de manière décalée latéralement par rapport à l'axe longitudinal du câble de tensionnement (9).

3. Toit de véhicule selon la revendication 1 ou 2,
**caractérisé en ce que**
la longueur de levier entre le point d'engagement du ressort de tensionnement (11) avec le levier de transfert (12) et le palier pivotant (13) est plus grande que la longueur de levier entre le palier pivotant (13) et le point d'engagement du ressort de tensionnement (11) avec le levier de transfert (12).

4. Toit de véhicule selon l'une quelconque des revendications 1 à 3,
**caractérisé en ce que**
le ressort de tensionnement (11) est disposé de manière décalée par rapport au câble de tensionnement (9).

5. Toit de véhicule selon la revendication 4,
**caractérisé en ce que**
le câble de tensionnement (9) s'étend dans la région de toit latérale située à l'extérieur et le ressort de tensionnement (11) est disposé de manière décalée vers l'intérieur par rapport au câble de tensionnement (9).

6. Toit de véhicule selon l'une quelconque des revendications 1 à 5,
**caractérisé en ce que**
le ressort de tensionnement (11) est réalisé sous forme de ressort de traction.

7. Toit de véhicule selon l'une quelconque des revendications 1 à 6,
**caractérisé en ce que**
le ressort de tensionnement (11) et le levier de transfert (12) sont fixés à un élément de toit arrière disposé fixement sur la carrosserie.

8. Toit de véhicule selon l'une quelconque des revendications 1 à 7,
**caractérisé en ce que**
le levier de transfert (12) est supporté sur une butée (14) pour limiter le mouvement de pivotement dans la direction du ressort de tensionnement (11).

9. Toit de véhicule selon l'une quelconque des revendications 1 à 8,
**caractérisé en ce que**
le câble de tensionnement (9) est guidé dans une rainure d'étanchéité dans la direction longitudinale du véhicule.

10. Véhicule cabriolet comprenant un toit de véhicule (1) selon l'une quelconque des revendications 1 à 9.
